# EUROPÄISCHE PATENTSCHRIFT

(11) **EP 0 798 952 B1**
(45) Veröffentlichungstag und Bekanntmachung des Hinweises auf die Patenterteilung: **07.06.2000**
(21) Anmeldenummer: 97103884.9
(22) Anmeldetag: 07.03.1997
(51) Int. Cl.: H05B 41/292

(54) **Schaltungsanordnung zum Betrieb von elektrischen Lampen und Betriebsverfahren für elektrische Lampen**
Circuit arrangement for operating electric lamps and method of operation
Circuit pour l'opération de lampes électriques et procédé d'opération

(30) Priorität: 27.03.1996 DE 19612170
(43) Veröffentlichungstag der Anmeldung: 01.10.1997
(73) Patentinhaber: Patent-Treuhand-Gesellschaft für elektrische Glühlampen mbH, 81543 München (DE)
(72) Erfinder: Rudolph, Bernd, 81375 München (DE)

(56) Entgegenhaltungen:
- EP-A- 0 435 228
- DE-A- 4 123 187
- US-A- 4 547 706

## Beschreibung

Die Erfindung betrifft eine Schaltungsanordnung zum Betrieb von elektrischen Lampen gemäß dem Oberbegriff des Patentanspruches 1 und ein Betriebsverfahren für elektrische Lampen gemäß dem Oberbegriff des Patentanspruches 3.

Eine derartige Schaltungsanordnung ist beispielsweise in der europäischen Patentschrift EP 0 113 451 offenbart. In dieser Schrift wird ein Wechselrichter mit einem eine Entladungslampe enthaltenden Lastkreis und einem an den Wechselrichterausgang angeschlossenen Serienresonanzkreis beschrieben. Zur Begrenzung der Leerlaufspannung im Serienresonanzkreis wird eine aus einem Varistor und einem Kondensator bestehende Reihenschaltung verwendet, die in einem Parallelzweig zum Resonanzkondensator angeordnet ist. Die aus dem Varistor und dem Kondensator bestehende Reihenschaltung verändert die im Resonanzkreis wirksame Resonanzkapazität und sorgt so für eine spannungsabhängige Verschiebung der Resonanzfrequenz des Serienresonanzkreises. Diese Schaltungsanordnung benötigt allerdings für jeden Serienresonanzkreis einen voluminösen und vergleichsweise teuren Varistor.

Die Offenlegungsschrift EP 0 435 228 beschreibt eine Schaltungsanordnung zum Betrieb einer Gasentladungslampe. Diese Schaltungsanordnung weist einen Resonanzkreis, an den die Lampe mit ihren beiden Heizwendeln angeschlossen ist, und einen Wechselspannungsgenerator, der an seinem Ausgang eine Wechselspannung variabler Frequenz und/oder variablen Tastverhältnisses abgibt, auf. Um eine schonende Zündung der nicht beheizten Gasentladungslampe zu erreichen, besitzt der Resonanzkreis zwei Resonanzfrequenzen. Zur Zündung liegt die Frequenz der Ausgangswechselspannung des Wechselspannungsgenerators in der Nähe der oberen Resonanzfrequenz.

Es ist die Aufgabe der Erfindung, eine Schaltungsanordnung zum Betrieb elektrischer Lampen bereitzustellen, die in dem an den Wechselrichterausgang angeschlossenen Lastkreis auf möglichst einfache und kostengünstige Weise eine gut kontrollierbare Leerlaufspannung mit geringen Toleranzen und insbesondere eine den allgemeinen Sicherheitsanforderungen genügende Begrenzung sowohl der Leerlaufspannung als auch der Spannung gegen den Nulleiter gewährleistet.

Diese Aufgabe wird erfindungsgemäß durch die kennzeichnenden Merkmale des Patentanspruchs 1 beziehungsweise des Patentanspruchs 3 gelöst. Besonders vorteilhafte Ausführungen der Erfindung sind in den Unteransprüchen beschrieben.

Das erfindungsgemäße Betriebsverfahren für elektrische Lampen an einer Schaltungsanordnung, die einen selbstschwingenden Wechselrichter mit Stromrückkoppelung mit mindestens zwei alternierend schaltenden Schalttransistoren und einen an den Wechselrichterausgang angeschlossenen, als Resonanzkreis ausgebildeten Lastkreis aufweist, zeichnet sich dadurch aus, daß eine Begrenzung der Leerlaufspannung in dem Lastkreis erreicht wird, indem der Emitter- bzw. Sourcewiderstand eines der Wechselrichtertransistoren in Abhängigkeit des Spannungsabfalls an einem der Resonanzkreisbauteile und damit auch die Taktfrequenz des Wechselrichters verändert wird, so daß sich die Differenz zwischen der Wechselrichtertaktfrequenz und der Resonanzfrequenz des Resonanzkreises vergrößert.

Zur Realisierung dieses Betriebsverfahrens weist die Schaltungsanordnung erfindungsgemäß einen Transistor - vorteilhafterweise einen Feldeffekttransistor - auf, dessen Steuerstrecke in der Emitterleitung eines der Wechselrichtertransistoren angeordnet ist. Der Steuereingang dieses Transistors ist durch einen ersten Strompfad mit einer Spannungsquelle verbunden und über einen zweiten Strompfad an einen Spannungsteiler angeschlossen, der über einem Abgriff im Lastkreis mit einem Resonanzkreisbauteil verbunden ist. Über die Leitfähigkeit der Steuerstrecke dieses Transistors, das ist die Drain-Source-Strecke bzw. die Kollektor-Emitter-Strecke, wird während des Normalbetriebes der Schaltungsanordnung der Emitterwiderstand des entsprechenden Wechselrichtertransistors und damit die Taktfrequenz des selbstschwingenden Wechselrichters mit Stromrückkoppelung eingestellt. Übersteigt die Leerlaufspannung in dem als Resonanzkreis ausgebildeten Lastkreis einen durch die Dimensionierung der Schaltungsbauteile vorgegebenen Wert, so wird mit Hilfe des Schwellwertschalters das Eingangssignal für die Steuerelektrode, das ist die Gate- bzw. Basis-Elektrode, des in der Emitterleitung des Wechselrichtertransistors angeordneten Transistors variiert. Dadurch verändern sich die Leitfähigkeit der Drain-Source-Strecke bzw. die Kollektor-Emitter-Strecke dieses Transistors und auch der Emitterwiderstand des entsprechenden Wechselrichtertransistors sowie die Taktfrequenz des selbstschwingenden Wechselrichters mit Stromrückkoppelung. Die Änderung der Wechselrichtertaktfrequenz erfolgt dabei so, daß sich die Differenz von Wechselrichtertaktfrequenz und Resonanzfrequenz des als Resonanzkreis ausgebildeten Lastkreises vergrößert. Diese Frequenzverstimmung hat eine reduzierte Leerlaufspannung in dem Lastkreis zur Folge. Die Leerlaufspannung in dem Lastkreis kann vorteilhafterweise durch eine geeignete Wahl von Spannungsteilerwiderständen, die in dem vorgenannten ersten und/ oder zweiten, an dem Steuereingang des erfindungsgemäßen Transistors endenden Strompfad angeordnet sind, auf den gewünschten Wert eingestellt werden. Dadurch lassen sich die allgemeinen Sicherheitsanforderungen gemäß der Vorschrift EN 60 928 erfüllen.

Über die elektrische Leitfähigkeit der Drain-Source- bzw. der Kollektor-Emitter-Strecke des in der Emitterleitung bzw. Sourceleitung eines der Wechselrichtertransistoren angeordneten erfindungsgemäßen Transistors wird also die Taktfrequenz des Wechselrichters derart eingestellt, daß die Leerlaufspannung in dem Lastkreis den durch die Dimensionierung der entsprechenden elektronischen Bauteile vorgegebenen Wert nicht überschreitet.

Zur Regelung oder Begrenzung der Leerlaufspannung wird vorteilhafterweise eine erste - die negative - Halbwelle der Resonanzkondensatorspannung ausgenutzt.

Der erfindungsgemäß in der Emitter- bzw. Sourceleitung eines der Wechselrichtertransistoren angeordnete Transistor dient aber nicht nur zur Begrenzung der Leerlaufspannung in dem als Resonanzkreis ausgebildeten Lastkreis, sondern übernimmt vorteilhafterweise zusätzlich auch die Abschaltung des Wechselrichters beim Auftreten eines anomalen Betriebszustandes der Schaltungsanordnung. Zu diesem Zweck besitzt die erfindungsgemäße Schaltungsanordnung eine bistabile Schalteinrichtung, deren Ausgang über einen dritten Strompfad mit dem Steuereingang des in der Emitterleitung bzw. Sourceleitung eines der Wechselrichtertransistoren angeordneten Transistors verbunden ist, während am Eingang dieser bistabilen Schalteinrichtung eine elektrische Spannung anliegt, die proportional zur zeitlich gemittelten zweiten - der positiven - Halbwelle der Resonanzkondensatorspannung des Lastkreises ist.

Der erfindungsgemäß in der Emitter- bzw. Sourceleitung eines der Wechselrichtertransistoren angeordnete Transistor übernimmt also zwei unterschiedliche Funktionen.

Während des normalen Betriebes der Schaltungsanordnung arbeitet er als analog gesteuertes Element, indem er, abhängig von der Leerlaufspannung in dem Lastkreis, verschiedene niederohmige Zustände annimmt und dadurch die Wechselrichtertaktfrequenz verändert, während er beim Auftreten eines Störfalles als Schalter arbeitet und in den hochohmigen Zustand übergeht, um die Schwingung des Wechselrichters zu unterbrechen.

Nachstehend wird die Erfindung anhand eines bevorzugten Ausführungsbeispiels näher erläutert. Es zeigen:
- Figur 1: Eine schematische Schaltskizze zum Prinzip der Erfindung
- Figur 2: Ein bevorzugtes Ausführungsbeispiel der erfindungsgemäßen Schaltungsanordnung

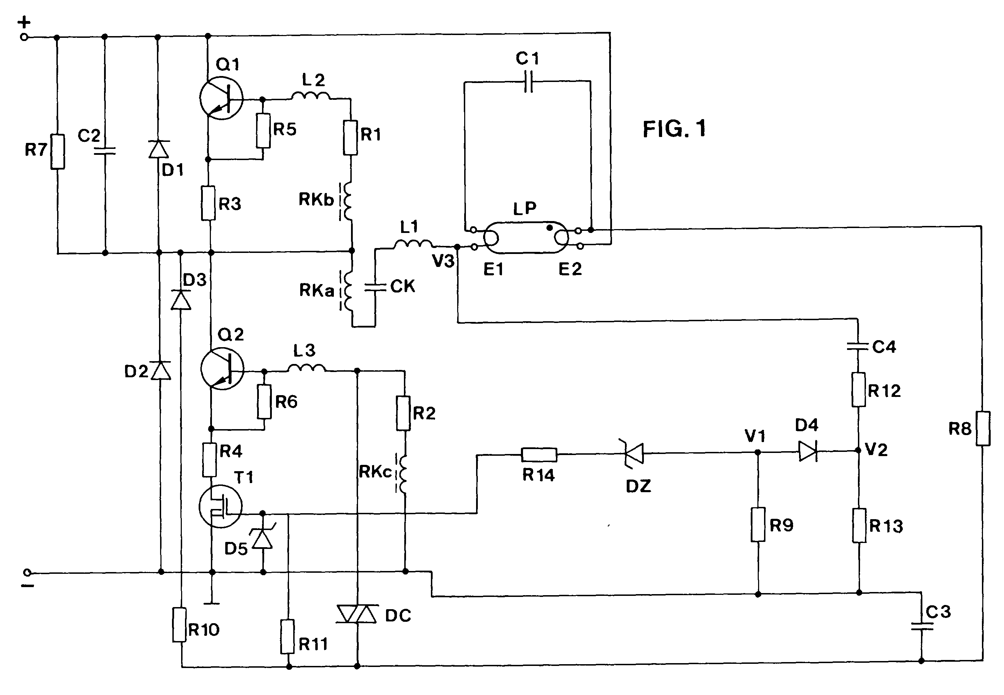

Anhand der Figur 1, die eine schematische Schaltskizze zum Betrieb einer Niederdruckentladungslampe zeigt, wird das Prinzip der erfindungsgemäßen Schaltungsanordnung nachstehend näher erläutert. Diese Schaltungsanordnung besitzt einen mit zwei Bipolartransistoren Q1, Q2 bestückten Halbbrückenwechselrichter. Beide Bipolartransistoren Q1, Q2 sind jeweils mit einer Freilaufdiode D1, D2 ausgestattet, die parallel zur Kollektor-Emitter-Strecke des entsprechenden Transistors Q1, Q2 geschaltet sind. Außerdem besitzen beide Bipolartransistoren Q1, Q2 jeweils einen Emitterwiderstand R3, R4 und einen Basis-Emitter-Parallelwiderstand R5, R6. Parallel zur Kollektor-Emitter-Strecke des Transistors Q1 sind ferner ein ohmscher Widerstand R7 und eine Kapazität C2 geschaltet.

Die Ansteuerung der beiden Schalttransistoren Q1, Q2 der Halbbrücke erfolgt mittels eines Ringkerntransformators, der eine Primärwicklung RKa und zwei Sekundärwicklungen RKb, RKc besitzt. Die Primärwicklung RKa ist in den Serienresonanzkreis des Halbbrückenwechselrichters integriert, der am Mittenabgriff M des Wechselrichters angeschlossen ist und den Koppelungskondensator CK, die Resonanzinduktivität L1 sowie den Resonanzkondensator C1 enthält. Die Sekundärwicklungen RKb, RKc sind jeweils in den Basis-Emitter-Kreis eines Wechselrichtertransistors Q1, Q2 integriert und jeweils über einen Basisvorwiderstand R1, R2 und eine Induktivität L2, L3 mit dem Basisanschluß des betreffenden Bipolartransistors Q1, Q2 verbunden. Der Halbbrückenwechselrichter besitzt ferner eine Startvorrichtung, die im wesentlichen aus dem Diac DC und dem Startkondensator C3 besteht. Der Diac DC ist über die Induktivität L3 mit dem Basisanschluß des Wechselrichtertransistors Q2 verbunden. Ein Anschluß des Startkondensators C3 ist an den Minuspol der Wechselrichtergleichspannungsversorgung angeschlossen, während sein anderer Anschluß einerseits über einen ohmschen Widerstand R10 und eine Gleichrichterdiode D3 zu dem Mittenabgriff M der Halbbrücke und andererseits über einen ohmschen Widerstand R8 sowie die Elektrodenwendel E2 der Niederdruckentladungslampe LP zum Pluspol der Wechselrichtergleichspannungsversorgung geführt ist.

Die zu betreibenden Leuchtstofflampe LP ist parallel zum Resonanzkondensator C1 geschaltet. Ein Anschluß der ersten Elektrodenwendel E1 der Lampe LP ist an die Resonanzinduktivität L1 angeschlossen, während der andere Anschluß der ersten Elektrodenwendel E1 mit dem Resonanzkondensator C1 verbunden ist. Ein Anschluß der zweiten Lampenelektrodenwendel E2 ist zum Pluspol der Wechselrichtergleichspannungsversorgung geführt und der andere Anschluß der zweiten Lampenelektrodenwendel ist über einen ohmschen Widerstand R8 mit dem Startkondensator C3 verbunden.

Soweit entspricht die Schaltungsanordnung einem Halbbrückenwechselrichter wie er beispielsweise auf den Seiten 62-63 des Buches "Schaltnetzteile" von W. Hirschmann/ A. Hauenstein, Herausgeber Siemens AG, beschrieben ist.

Nach dem Einschalten lädt sich der Startkondensator C3 auf die Durchbruchsspannung des Diacs DC auf, der dann Triggerimpulse für die Basis des Bipolartransistors Q2 erzeugt und dadurch das Anschwingen des Halbbrückenwechselrichters veranlaßt. Nach dem Durchschalten des Transistors Q2 wird der Startkondensator C3 über den Widerstand R10 und die Diode D3 soweit entladen, daß der Diac DC keine weiteren Triggerimpulse generiert. Die beiden Wechselrichtertransistoren Q1, Q2 schalten alternierend, so daß der Mittenabgriff M der Halbbrücke abwechselnd mit dem Plus- oder Minuspol der Gleichspannungsversorgung verbunden ist. Das hierdurch bedingte Umladen des Koppelungskondensators CK verursacht im Serienresonanzkreis und in der Lampe LP einen mittelfrequenten Wechselstrom, dessen Frequenz mit der Taktfrequenz des Halbbrückenwechselrichters übereinstimmt. Die Taktfrequenz des Halbbrückenwechselrichters beträgt üblicherweise mehr als 20 kHz. Die elektronischen Bauteile der erfindungsgemäßen Schaltungsanordnung sind außerdem so dimensioniert, daß die Taktfrequenz des selbstschwingenden Halbbrückenwechselrichter oberhalb der Resonanzfrequenz des Serienresonanzkreises L1, C1 liegt.

In die Emitterleitung des zweiten Halbbrückentransistors Q2 ist ein Feldeffekttransistor T1 geschaltet, mit dessen Hilfe der wirksame Emitterwiderstand des zweiten Halbbrückentransistors Q2 variiert werden kann. Der Drain-Anschluß dieses Feldeffekttransistors T1 ist über den Emitterwiderstand R4 mit dem Emitter des Schalttransistors Q2 verbunden. Der Source-Anschluß des Feldeffekttransistors T1 ist geerdet bzw. an den Minuspol der Gleichspannungsversorgung des Wechselrichters angeschlossen. Das Gate des Feldeffekttransistors T1 ist einerseits über eine als Überspannungsschutz dienende Zenerdiode D5 und andererseits über einen ohmschen Widerstand R14, eine Zenerdiode DZ, einen Verzweigungspunkt V1 und einen ohmschen Widerstand R9 mit dem Minuspol der Gleichspannungsversorgung verbunden. Der Verzweigungspunkt V1 ist über eine gegensinnig zur Zenerdiode DZ gepolte Gleichrichterdiode D4, einen weiteren Verzweigungspunkt V2, einen ohmschen Widerstand R12 und einen Kondensator C4 mit einem Abgriff V3 im Serienresonanzkreis verbunden. Der Abgriff V3 liegt zwischen der Resonanzinduktivität L1 und dem Resonanzkondensator C1. Die Entladungsstrecke der Niederdruckentladungslampe LP ist parallel zum Resonanzkondensator C1 angeordnet. Der Verzweigungspunkt V2 ist über einen ohmschen Widerstand R13 an den Minuspol der Gleichspannungsversorgung angeschlossen. Die ohmschen Widerstände R9, R12 und R13 bilden einen Spannungsteiler, der über den Kondensator C4 wechselstrommäßig parallel zum Resonanzkondensator und zur Lampe LP angeordnet ist.

Beim Einschalten der Schaltungsanordnung wird der Feldeffekttransistor T1 über die Elektrodenwendel E2, die Widerstände R8 und R11, die das Gate des Feldeffekttransistors T1 mit dem Pluspol der Gleichspannungsquelle verbinden, vor dem Starten des Wechselrichters niederohmig gesteuert. Der Diac DC gibt Triggerimpulse an die Basis des zweiten Halbbrückentransistors Q2 und veranlaßt so, wie oben bereits beschrieben, das Anschwingen des Halbbrückenwechselrichters. Im Normalfall wird dann die Niederdrukkentladungslampe nach kurzer Zeit durchzünden. Am Abgriff V3 im Serienresonanzkreis wird von dem Spannungsteiler R9, R12, R13 der Spannungsabfall am Resonanzkondensator C1 bzw. an der Lampe LP detektiert und entsprechend der Widerstandswerte dieser ohmschen Widerstände heruntergeteilt. Solange die Amplitude der Resonanzkondensatorspannung einen kritischen Wert, der durch eine geeignete Dimensionierung der Widerstände R9, R13 und R14 auf einen gewünschten Wert eingestellt werden kann, unterschreitet bleibt die Zenerdiode DZ und damit auch der Strompfad, der ausgehend vom Gate des Feldeffekttransistors T1 über den Widerstand R14, die Zenerdiode DZ und den ohmschen Widerstand R9 zum Minuspol der Gleichspannungsquelle führt, stromlos und der Feldeffekttransistor T1 erhält über die Widerstände R8 und R11 sein volles Steuersignal. Erreicht die Amplitude der Resonanzkondensatorspannung diesen kritischen Wert, so steigt beim Durchlaufen der negativen Halbwelle der Resonanzkondensatorspannung der Spannungsabfall zwischen dem Gate des Feldeffekttransistors T1 und dem Verzweigungspunkt V2 so weit an, daß die Zenerdiode DZ leitfähig wird. Das hat zur Folge, daß das Gate des Feldeffekttransistors T1 über die Widerstände R8 und R11 nur ein reduziertes Steuersignal erhält, da ein Teil dieses Steuersignals über den Widerstand R14, die nun leitfähige Zenerdiode DZ und die nun parallel geschalteten Spannungsteilerwiderstände R9 und R13 zum Minuspol der Gleichspannungsquelle abfließt. Die Gleichrichterdiode D4 ist so gepolt, daß die Zenerdiode DZ nur auf die negative Halbwelle der Resonanzkondensatorspannung sensitiv reagiert. Die Stärke des verbleibenden Steuersignals kann, bei sonst unveränderten Parametern, durch die Dimensionierung der Widerstände R9 und R14 eingestellt werden. Ein reduziertes Steuersignal für das Gate des Feldeffekttransistors T1 verringert die Leitfähigkeit der Drain-Source-Strecke des Feldeffekttransistors T1 und erhöht so den wirksamen Emitterwiderstand des Bipolartransistors Q2, da sich der effektive Emitterwiderstand im wesentlichen additiv aus dem Widerstandswert des ohmschen Widerstandes R4 und dem Widerstandswert der Drain-Source-Strecke des Feldeffekttransistors T1 zusammensetzt. Ein erhöhter Emitterwiderstand hat zur Folge, daß der Ringkerntransformator RK schneller seine magnetische Sättigungsflußdichte erreicht und dadurch die Einschaltdauer des Halbbrückenwechselrichtertransistors Q2 entsprechend verkürzt wird. Damit führt eine Vergrößerung des effektiven Emitterwiderstandes zu einer entsprechend höheren Taktfrequenz des Halbbrückenwechselrichters. Da die Taktfrequenz des Halbbrückenwechselrichters oberhalb der Resonanzfrequenz des Serienresonanzkreises liegt, führt eine Erhöhung der Wechselrichtertaktfrequenz zu einer Vergrößerung der Frequenzverstimmung zwischen der Resonanzfrequenz des Serienresonanzkreises L1, C1 und der Taktfrequenz des Halbbrückenwechselrichters Q1, Q2. Dadurch verringert sich die Leerlaufspannung im an den Wechselrichterausgang M angeschlossenen Serienresonanzkreis.

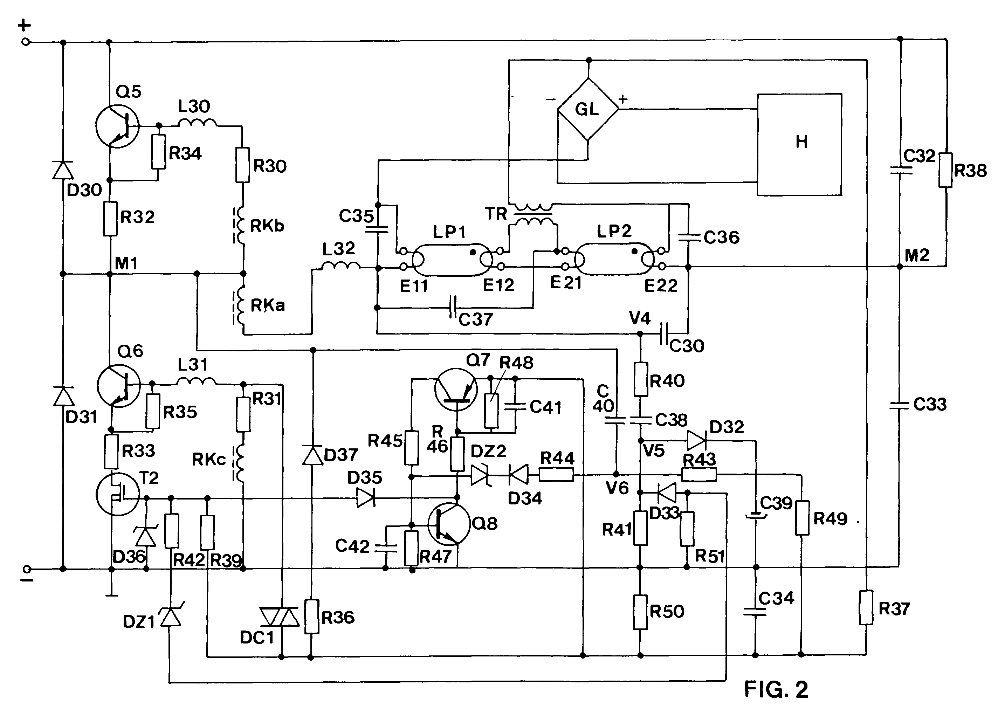

In der Figur 2 ist das vollständige Schaltbild einer erfindungsgemäßen Schaltungsanordnung zum Betrieb von zwei Niederdruckentladungslampen dargestellt. Eine geeignete Dimensionierung der hier abgebildeten elektronischen Bauteile ist in der Tabelle angegeben. Diese Schaltungsanordnung besitzt einen selbstschwingenden Halbbrückenwechselrichter mit Stromrückkoppelung, der im wesentlichen von zwei Bipolartransistoren Q5, Q6, dem Ringkerntransformator RKa, RKb, RKc, den Basisvorwiderständen R30, R31 und den Emitterwiderständen R32, R33 gebildet und mit einer Gleichspannung gespeist wird. Diese Gleichspannung wird hier in bekannter Weise durch Gleichrichtung und anschließende Glättung aus der Netzspannung gewonnen. Die Bipolartransistoren Q5, Q6 sind jeweils mit einer Freilaufdiode D30, D31 ausgestattet, die parallel zur Kollektor-Emitter-Strecke des entsprechenden Halbbrückentransistors Q5, Q6 geschaltet ist. Außerdem besitzen beide Bipolartransistoren jeweils einen Basis-Emitter-Parallelwiderstand R34, R35 und eine Induktivität L30, L31, die in Serie zum Basisvorwiderstand R30, R31 geschaltet und mit dem Basisanschluß des entsprechenden Halbbrückentransistors Q5, Q6 verbunden ist. An den Ausgang des Halbbrückenwechselrichters, das heißt, zwischen dem Mittenabgriff M1 der Halbbrückenwechselrichtertransistoren Q5, Q6 und dem Mittenabgriff M2 der beiden Koppelungskondensatoren C32, C33, ist ein Serienresonanzkreis angeschlossen, der die Primärwicklung RKa des Ringkerntransformators, die Resonanzinduktivität L32 und den Resonanzkondensator C30 enthält.

Parallel zum Resonanzkondensator C30 sind zwei in Reihe zueinander geschaltete Niederdruckentladungslampen LP1, LP2 angeordnet. Die Elektrodenwendeln E11, E12 und E21, E22 dieser beiden Lampen werden vor dem Zünden der Lampen mit Hilfe einer Heizvorrichtung H und eines Heiztransformators TR vorgeheizt. Zu diesem Zweck sind die Elektrodenwendel E11 der ersten Niederdruckentladungslampe LP1 und die Elektrodenwendel E22 der zweiten Niederdruckentladungslampe LP2 zusammen mit der Primärwicklung des Heiztransformators TR, dem Brückengleichrichter GL und der Heizvorrichtung H in einem ersten gemeinsamen Heizkreis angeordnet, während die andere Elektrodenwendel E12 der ersten Niederdruckentladungslampe LP1 sowie die andere Elektrodenwendel E21 der zweiten Niederdruckentladungslampe LP2 zusammen mit der Sekundärwicklung des Heiztransformators TR einen zweiten Heizkreis bilden. Die Elektrodenwendeln E11 und E22 weisen jeweils einen parallel geschalteten Kondensator C35, C36 auf. Parallel zur Niederdruckentladungslampe LP1 ist ein Zündkondensator C37 geschaltet. Die Heizvorrichtung H ist detailliert in der Offenlegungsschrift EP 0 693 864 beschrieben.

Die Ansteuerung des selbstschwingenden Halbbrückenwechselrichters erfolgt mit Hilfe des Ringkerntransformators, dessen Sekundärwicklungen RKb, RKc jeweils in der Basisleitung eines der Halbbrückenwechselrichtertransistoren Q5, Q6 angeordnet sind. Das Anschwingen des Halbbrückenwechselrichter wird durch eine Startschaltung ermöglicht, die mit dem Basisanschluß des zweiten Halbbrückenwechselrichtertransistors Q6 verbunden ist und im wesentlichen aus dem Diac DC1, dem Startkondensator C34, dem ohmschen Widerstand R36 und der Diode D37 besteht. Ein Anschluß des Startkondensators C34 ist mit dem auf Masse liegenden Minuspol der Halbbrückenwechselrichtergleichspannungsversorgung verbunden, während sein anderer Anschluß über den ohmschen Widerstand R37, die Primärwicklung des Heiztransformators TR, die Elektrodenwendel E22 der Niederdruckentladungslampe LP2 und den ohmschen Widerstand R38 an den Pluspol der Gleichspannungsversorgung angeschlossen ist.

In der Emitterleitung des Halbbrückenwechselrichtertransistors Q6 ist, in Serie zum Emitterwiderstand R33, die Drain-Source-Strecke eines Feldeffekttransistors T2 angeordnet. Das Gate dieses Feldeffekttransistors T2 ist durch die Widerstände R39 und R37, die Primärwicklung des Heiztransformators TR, die Elektrodenwendel E22 der Niederdruckentladungslampe LP2 und den ohmschen Widerstand R38 mit dem Pluspol der Gleichspannungsversorgung des Halbbrückenwechselrichters verbunden.

Die Schaltungsanordnung besitzt ferner einen wechselstrommäßig parallel zum Resonanzkondensator C30 und zu den Niederdruckentladungslampen LP1, LP2 geschalteten Zweig, der an den Abgriff V4 im Resonanzkreis angeschlossen ist, und über den Widerstand R40, den Kondensator C38, den Verzweigungspunkt V5, die in Vorwärtsrichtung gepolte Diode D32 und dem Kondensator C39 mit Masse bzw. mit dem Minuspol der Gleichspannungsversorgung verbunden ist. Der Verzweigungspunkt V5 ist außerdem über den Widerstand R41 mit dem Minuspol der Gleichspannungsversorgung verbunden sowie über die in Rückwärtsrichtung gepolte Diode D33, die Zenerdiode DZ1 und den Widerstand R42 mit dem Gate des Feldeffekttransistors T2 verbunden. Die ohmschen Widerstände R40, R41 und der Widerstand R51, der über die Diode D33 parallel zum Widerstand R41 geschaltet ist, bilden einen Spannungsteiler, der den Spannungsabfall am Resonanzkondensator C30 detektiert. Am Mittenabgriff M1 des Halbbrückenwechselrichters ist ein Kondensator C40 angeschlossen, der über den Verzweigungspunkt V6 und über den Widerstand R43 und mit einem Anschluß des Kondensators C39 verbunden ist. Der Verzweigungspunkt V6 ist über den Widerstand R44, die in Vorwärtsrichtung gepolte Diode D34 und die Zenerdiode DZ2 an den Eingang einer bistabilen Schalteinheit angeschlossen. Die bistabile Schalteinheit besteht aus zwei Bipolartransistoren Q7, Q8, den Widerständen R45, R46, R47, R48 und den Kondensatoren C41, C42. Diese vorgenannten Bauteile bilden eine Thyristor-Ersatzschaltung, deren Aufbau und Funktionsweise beispielsweise in dem Buch "Bauelemente der Elektronik und ihre Grundschaltungen", Seite 395-396, von H. Höger, F. Kähler, G. Weigt aus der Reihe "Einführung in die Elektronik" Bd. 1, Verlag H. Stam GmbH, 7. Auflage beschrieben sind. Der Ausgang dieser bistabilen Schalteinheit ist über die in Rückwärtsrichtung gepolte Diode D35 mit dem Gate des Feldeffekttransistors T2 verbunden. Die beiden hochohmigen Widerstände R49 und R50 ermöglichen, daß sich die Kondensatoren C39 und C34 nach dem Abschalten des Halbbrückenwechselrichters entladen können. Parallel zur Gate-Source-Strecke des Feldeffekttransistors T2 ist eine Zenerdiode D36 geschaltet, die den Spannungsabfall auf ca. 12 V begrenzt.

Die Funktionsweise der in Figur 2 abgebildeten Schaltungsanordnung wird nachstehend beschrieben.

Unmittelbar nach dem Einschalten der Schaltungsanordnung wird die Drain-Source-Strecke des Feldeffekttransistors T2 über den Widerstand R38, die Elektrodenwendel E22, die Primärwicklung des Heiztransformators TR und die Widerstände R37, R39 niederohmig gesteuert. Gleichzeitig lädt sich der Startkondensator C34 über den Widerstand R38, die Elektrodenwendel E22, die Primärwicklung des Heiztransformators TR und den Widerstand R37 auf die Durchbruchsspannung des Diacs DC1 auf, so daß der Diac DC1 Triggerimpulse für die Basis des Bipolartransistors Q6 erzeugt und dadurch das Anschwingen des Halbbrückenwechselrichters veranlaßt. Nach dem Durchschalten des Halbbrückenwechselrichtertransistors Q6 wird der Startkondensator C34 über den Widerstand R36 und die Diode D37 so weit entladen, daß der Diac DC1 keine weiteren Triggerimpulse generiert. Die beiden Wechselrichtertransistoren Q5, Q6 schalten alternierend, so daß ihr Mittenabgriff M1 abwechselnd mit dem Plus- und Minuspol der Gleichspannungsversorgung des Halbbrückenwechselrichters verbunden ist. Dadurch wird im Serienresonanzkreis L32, C30, der zwischen dem Mittenabgriff M1 des Halbbrückenwechselrichters und dem Mittenabgriff M2 der Koppelungskondensatoren C32, C33 angeordnet ist, ein mittelfrequenter Wechselstrom, dessen Frequenz mit der Schaltfrequenz des Halbbrückenwechselrichters übereinstimmt, erzeugt. Die Heizvorrichtung H und der Heiztransformator TR gewährleisten, daß die Elektrodenwendeln E11, E12, E21, E22 vor dem Durchzünden der Niederdruckentladungslampen LP1, LP2 mit Hilfe eines Heizstromes ausreichend vorgeheizt werden. Die Funktionsweise der Heizvorrichtung ist ausführlich in der europäischen Offenlegungsschrift EP 0 693 864 erläutert.

Der Feldeffekttransistor T2 erfüllt erfindungsgemäß zwei unterschiedliche Funktionen. Er wird erstens zur Begrenzung bzw. Regelung der Leerlaufspannung im Serienresonanzkreis herangezogen und zweitens zur Sicherheitsabschaltung des Halbbrückenwechselrichters beim Auftreten eines anomalen Betriebszustandes, beispielsweise bei defekter Lampe, ausgenutzt.

Zum Zweck der Begrenzung bzw. Regelung der Leerlaufspannung im Serienresonanzkreis wird mit Hilfe der Bauelemente R40, C38, R41, R51, D33, DZ1, R42 am Abgriff V4 der Spannungsabfall am Resonanzkondensator C30 überwacht. Solange der Spannungsabfall am Resonanzkondensator C30 einen kritischen Wert unterschreitet bleibt die Zenerdiode DZ1 gesperrt und der Feldeffekttransistor T2 erhält sein volles Steuersignal. Erreicht aber die Amplitude der Wechselspannung am Resonanzkondensator C30 diesen kritischen Wert, so wird, während die Wechselspannung am Resonanzkondensator C30 die negative Halbwelle durchläuft, der Spannungsabfall zwischen dem Verzweigungspunkt V5 und dem Gate des Feldeffekttransistors T2 ausreichen, um die Zenerdiode DZ1 leitfähig werden zu lassen. Dadurch wird das vom Pluspol der Gleichspannungsversorgung über den Widerstand R38, die Elektrodenwendel E22, die Primärwicklung des Heiztransformators TR und die Widerstände R37, R39 eingekoppelte Steuersignal für das Gate des Feldeffekttransistors T2 teilweise über den Widerstand R42, die nun leitende Zenerdiode DZ1 und die nun durch die Diode D33 parallel geschalteten Widerstände R41, R51 zum Minuspol der Gleichspannungsversorgung abgeleitet und das Eingangssignal für den Feldeffekttransistor T2 entsprechend reduziert. Das reduzierte Steuersignal am Gate des Feldeffekttransistors T2 verringert die Leitfähigkeit der Drain-Source-Strecke des Feldeffekttransistors T2, erhöht also den wirksamen Emitterwiderstand des Bipolartransistors Q6 und verkürzt dadurch die Einschaltdauer des Transistors Q6, so daß die Taktfrequenz des Halbbrückenwechselrichters erhöht wird. Da die Taktfrequenz oder Schaltfrequenz des Halbbrückenwechselrichters oberhalb der Resonanzfrequenz des Serienresonanzkreises liegt, vergrößert die Erhöhung der Taktfrequenz die Frequenzverstimmung zwischen der Taktfrequenz oder Schaltfrequenz des Halbbrückenwechselrichters und der Resonanzfrequenz des Serienresonanzkreises, so daß die maximal mittels der Methode der Resonanzüberhöhung am Resonanzkondensator C30 erzielbare Leerlaufspannung entsprechend dieser Frequenzverstimmung reduziert wird. Durch eine geeignete Dimensionierung der Widerstände R42 und R51 kann die Stärke des verbleibenden Eingangssignals am Gate des Feldeffekttransistors T2, und damit auch die Leerlaufspannung im Serienresonanzkreis, auf einen gewünschten Wert eingestellt werden. Wegen der Polung der Diode D33 wird zur Spannungsregelung bzw. Spannungsbegrenzung nur die negative Halbwelle der Resonanzkondensatorspannung ausgenutzt.

Bei dem Ausführungsbeispiel gemäß der Figur 2 mit der in der Tabelle angegebenen Dimensionierung der Bauteile hat die Drain-Source-Strecke des Feldeffekttransistors T2 im voll durchgesteuerten Zustand, das heißt, daß am Gate eine Eingangsspannung von nahezu 12 V - das ist die Schwellenspannung der Zenerdiode D36 - anliegt, einen Widerstand von ungefähr 0,1 Ω. Die Spannungsregelung setzt ein, wenn der Spannungsabfall am Resonanzkondensator C30 ca. 500 V erreicht hat. Ist der Spannungsabfall am Resonanzkondensator C30 auf ca. 1000 V gestiegen, so beträgt das Eingangssignal am Gate des Feldeffekttransistors T2 nur noch ca. 4 bis 5 V und der Widerstand der Drain-Source-Strecke ist auf ungefähr 1 Ω angewachsen.

Zur Sicherheitsabschaltung des Halbbrückenwechselrichters Q5, Q6 wird hingegen die positive Halbwelle der am Resonanzkondensator C30 auftretenden Wechselspannung herangezogen. Diese Sicherheitsabschaltung erfolgt synchron zur Sperrphase des Bipolartransistors Q6 mit Hilfe der bistabilen Schalteinheit Q7, Q8, deren Ausgang mit dem Gate des Feldeffekttransistors T2 verbunden ist. Am Eingang der bistabilen Schalteinheit liegt über den Widerstand R44, die Gleichrichterdiode D34 und die Zenerdiode DZ2 das Abschaltsignal an, das sich additiv aus zwei Spannungskomponenten zusammensetzt. Bei der ersten Spannungskomponente des Abschaltsignals handelt es sich um eine geglättete Gleichspannung, die proportional zum Spannungsabfall am Resonanzkondensator C30 ist. Sie wird mittels der Spannungsteilerwiderstände R40, R41, des Kondensators C38 und der Diode D32 am Kondensator C39 erzeugt. Bei der zweiten Spannungskomponente des Abschaltsignals handelt es sich um ein Synchronisationssignal, das proportional zur zeitlichen Änderung der Wechselrichterausgangsspannung am Mittenabgriff M1 ist. Sie wird mit Hilfe der als CR-Differenzierglied wirkenden Bauteile C40 und R43 generiert. Die CR-Reihenschaltung C40, R43 differenziert die am Mittenabgriff anliegende trapezförmige Ausgangsspannung des Halbbrückenwechselrichters und erzeugt dadurch am Widerstand R43 eine Rechteckspannung, die die zweite Spannungskomponente des Abschaltsignals bildet. Die positive Halbwelle dieser Rechteckspannung wird durch die ansteigende Flanke und die negative Halbwelle der Rechteckspannung wird durch die abfallende Flanke der trapezförmigen Wechselrichterausgangsspannung generiert. Die ansteigende Flanke der trapezförmigen Wechselrichterausgangsspannung entsteht am Beginn der Sperrphase des Bipolartransistors Q6, während die abfallende Flanke der trapezförmigen Wechselrichterausgangsspannung zu Beginn der Sperrphase des Bipolartransistors Q5 entsteht. Am Mittenabgriff V6 des Differenziergliedes C40, R43 liegt das gesamte Abschaltsignal an und wird dem Eingang der bistabilen Thyristorersatzschaltung Q7, Q8 über die Bauelemente R44, D34 und DZ2 zugeführt. Diese Bauelemente sind so dimensioniert, daß beim Normalbetrieb die kritische Schwellenspannung der Zenerdiode DZ2 unterschritten wird und die bistabile Schalteinheit Q7, Q8 deaktiviert bleibt. Ein anomaler Betriebszustand, der beispielsweise durch eine defekte Lampe hervorgerufen wurde, verursacht am Kondensator C39 einen erhöhten Spannungsabfall. Die positiven Spannungspitzen des Abschaltsignals, die von den positiven, der Kondensatorspannung an C39 aufaddierten Halbwellen der Rechteckspannung des Differenziergliedes C40, R43 geformt werden, überschreiten dann die Schwellenspannung der Zenerdiode DZ2 und aktivieren die Thyristorersatzschaltung Q7, Q8, durch die der Feldeffekttransistor T2 und damit auch der Halbbrückentransistor Q6 abgeschaltet werden. Der Halbbrückenwechselrichter wird dadurch stillgelegt und kann erst durch erneutes Einschalten oder durch Austausch der defekten Lampe neu gestartet werden.

**Tabelle:**

| Dimensionierung der in der Figur 2 abgebildeten elektronischen Bauteile gemäß des zweiten Ausführungsbeispiels | |
|---|---|
| R30, R31 | 7,5 Ω |
| R32 | 0,47 Ω |
| R33 | 0,39 Ω |
| R34, R35, R43 | 47 Ω |
| R36 | 22 kΩ |
| R37, R38 | 560 kΩ |
| R39 | 330 kΩ |
| R40 | 974 kΩ |
| R41 | 110 kΩ |
| R42 | 120 kΩ |
| R44 | 2,2 kΩ |
| R45, R46, R47, R48 | 10 kΩ |
| R49 | 4,7 MΩ |
| R50 | 1 MΩ |
| R51 | 150 kΩ |
| C30 | 7,5 nF |
| C32, C33 | 200 nF |
| C34 | 100 nF |
| C35, C36 | 33 nF |
| C37 | 330 pF |
| C38 | 100 pF |
| C39 | 1 µF |
| C40 | 33 pF |
| C41, C42 | 560 pF |
| L30, L31 | 4,7 µH |
| L32 | 1,29 mH |
| RKa, RKb, RKc | Ringkern R 8/4/3,8 |
| D30, D31, D37 | 1N4946 |
| D32, D33 | 1N4148 |
| D34, D35 | LL4148 |
| D36 | Zenerdiode, 12 V |
| DZ1, DZ2 | Zenerdiode, 27 V |
| DC1 | 1N413M |
| Q5, Q6 | BUF 644 |
| Q7 | BC857A |
| Q8 | BC847A |
| T2 | STK14N05 |

## Patentansprüche

1. Schaltungsanordnung zum Betrieb von elektrischen Lampen, wobei die Schaltungsanordnung folgende Merkmale aufweist:
- einen selbstschwingenden Wechselrichter mit Stromrückkoppelung mit mindestens zwei alternierend schaltenden Schalttransistoren (Ql, Q2; Q5, Q6),
- einen an den Ausgang des Wechselrichters angeschlossenen, als Resonanzkreis (Ll, Cl; L32, C30) ausgebildeten Lastkreis,
- Anschlüsse für wenigstens eine elektrische Lampe (LP; LP1, LP2),
- einen Transistor (Tl; T2), dessen Steuerstrecke in der Emitterleitung bzw. in der Sourceleitung eines Wechselrichtertransistors (Q2; Q6) angeordnet ist, wobei der Steuereingang dieses Transistors (Tl; T2) über einen ersten Strompfad (R11, R8, E2; R39, R37, TR, E22, R38) mit einer Spannungsquelle verbunden ist,
dadurch gekennzeichnet, daß
der Steuereingang dieses Transistors (T1; T2)
- über einen zweiten Strompfad (R14; R42), in den eine Zenerdiode (DZ; DZ1) und eine gegensinnig zur Zenerdiode (DZ; DZ1) gepolte Diode (D4; D33) geschaltet sind, an einen Spannungsteiler (R9, R12, R13; R40, R41, R51) angeschlossen ist, der über einen Abgriff (V3; V4) im Lastkreis mit einem Resonanzkreisbauteil (C1; C30) verbunden ist,
- durch einen dritten Strompfad mit dem Ausgang einer bistabilen Schalteinrichtung (Q7, Q8) verbunden ist, die, zwecks Abschaltung des Wechselrichters beim Auftreten eines anomalen Betriebszustandes, eine zeitlich gemittelte Halbwelle des Spannungsbfalls am Resonanzkreisbauteil (Cl; C30) überwacht.

2. Schaltungsanordnung nach Anspruch 1, dadurch gekennzeichnet, daß das Resonanzkreisbauteil (C1; C30) ein Kondensator ist.

3. Betriebsverfahren für elektrische Lampen an einer Schaltungsanordnung, die einen selbstschwingenden Wechselrichter mit Stromrückkoppelung mit mindestens zwei alternierend schaltenden Schalttransistoren (Q1, Q2; Q5, Q6), einen an den Wechselrichterausgang angeschlossenen Lastkreis mit mindestens einem Resonanzkreis (L1, C1; L32, C30) und einen in die Emitterleitung bzw. Sourceleitung eines Wechselrichtertransitors (Q2; Q6) geschalteten Transistor (T1; T2) aufweist, wobei der Emitterwiderstand bzw. Sourcewiderstand des Wechselrichtertransitors (Q2; Q6) und die Taktfrequenz des Wechselrichters mit Hilfe des Transistors (Q2; Q6) verändert werden,
dadurch gekennzeichnet, daß
- das Verändern des Emitterwiderstandes bzw. des Sourcewiderstandes eines der Wechselrichtertransistoren (Q2; Q6) zur Begrenzung der Leerlaufspannung im Lastkreis und in Abhängigkeit von einer ersten Halbwelle des Spannungsabfalls an einem Resonanzkreisbauteil (C1; C30) erfolgt, wobei der Emitterwiderstand bzw. der Sourcewiderstand des Wechselrichtertransistoren (Q2; Q6) zur Begrenzung der Leerlaufspannung im Lastkreis so verändert wird, daß sich die Differenz zwischen der Taktfrequenz des Wechselrichters und der Resonanzfrequenz des Resonanzkreises vergrößert,
- mittels einer bistabilen Schalteinrichtung (Q7, Q8) die zeitlich gemittelte zweite Halbwelle des Spannungsabfalls an dem Resonanzkreisbauteil (C1; C30) überwacht wird und der Wechselrichter beim Auftreten eines anomalen Betriebszustandes mit Hilfe des Transistors (T1; T2) durch die bistabile Schalteinrichtung (Q7, Q8) abgeschaltet wird.

## Claims

1. Circuit arrangement for operating electric lamps, the circuit arrangement having the following features:
- a self-oscillating inverter with current feedback, having at least two alternately switching switching transistors (Q1, Q2; Q5, Q6),
- a load circuit which is connected to the output of the inverter and designed as a resonant circuit (L1, C1; L32, C30),
- terminals for at least one electric lamp (LP; LP1, LP2),
- a transistor (T1; T2) whose control junction is arranged in the emitter line or in the source line of an inverter transistor (Q2; Q6), it being the case that the control input of this transistor (T1; T2) is connected via a first current path (R11, R8, E2; R39, R37, TR, E22, R38) to a voltage source,
characterized in that
the control input of this transistor (T1; T2)
- is connected via a second current path (R14; R42), into which a Zener diode (DZ; DZ1) and a diode (D4; D33) oppositely polarized to the Zener diode (DZ; DZ1) are connected, to a voltage divider (R9, R12, R13; R40, R41, R51) which is connected via a tap (V3; V4) in the load circuit to a resonant circuit component (C1; C30), and
- is connected via a third current path to the output of a bistable switching device (Q7, Q8) which, for the purpose of switching off the inverter upon the occurrence of an abnormal operating state, monitors a time-averaged half wave of the voltage drop across the resonant circuit component (C1; C30).

2. Circuit arrangement according to Claim 1, characterized in that the resonant circuit component (C1; C30) is a capacitor.

3. Operating method for electric lamps in a circuit arrangement which has a self-oscillating inverter with current feedback and with at least two alternately switching switching transistors (Q1, Q2; Q5, Q6), a load circuit connected to the inverter output and with at least one resonant circuit (L1, C1; L32, C30) and a transistor (T1; T2) connected into the emitter line or source line of an inverter transistor (Q2; Q6), the emitter resistance or source resistance of the inverter transistor (Q2; Q6) and the clock frequency of the inverter being varied with the aid of the transistor (Q2; Q6),
characterized in that
- the variation in the emitter resistance or source resistance of one of the inverter transistors (Q2; Q6) is effected for the purpose of limiting the no-load voltage in the load circuit and as a function of a first half wave of the voltage drop across a resonant circuit component (C1; C30), the emitter resistance and the source resistance of the inverter transistors (Q2; Q6) being varied for the purpose of limiting the no-load voltage in the load circuit such that the difference between the clock frequency of the inverter and the resonant frequency of the resonant circuit is increased, and
- by means of a bistable switching device (Q7, Q8) the time-averaged second half wave of the voltage drop across the resonant circuit component (C1; C30) is monitored and the inverter is switched off in the event of the occurrence of an abnormal operating state with the aid of the transistor (T1; T2) by the bistable switching device (Q7, Q8).

## Revendications

1. Montage pour faire fonctionner une lampe électrique, le montage comportant les disposition suivantes :
- un onduleur auto-hétérodyne à réinjection de courant, comportant au moins deux transistors (Q1, Q2 ; Q5, Q6) de commutation commutant en alternance,
- un circuit de charge, réalisé en circuit (L1, C1 ; L32, C30) résonant, raccordé à la sortie de l'onduleur,
- des bornes pour au moins une lampe (LP ; LP1, LP2) électrique,
- un transistor (T1 ; T2) dont la section de commande est montée dans la ligne d'émetteur ou dans la ligne de source d'un transistor (Q2 ; Q6) d'onduleur, l'entrée de commande de ce transistor (T1 ; T2) étant reliée à une source de tension par l'intermédiaire d'un premier trajet (R11, R8, E2 ; R39, R37, TR, E22, R38) de courant,
caractérisé en ce que
l'entrée de commande de ce transistor (T1 ; T2)
- est raccordée, par l'intermédiaire d'un deuxième trajet (R14 ; R42) de courant, dans lequel sont branchées une diode (DZ ; DZ1) de Zener et une diode (D4 ; D33) polarisée en sens inverse par rapport à la diode (DZ ; DZ1) Zener, à un diviseur (R9, R12, R13 ; R40, R41, R51) de tension qui est relié à un composant (C1 ; C30) du circuit résonant série par l'intermédiaire d'une prise (V3 ; V4) dans le circuit de charge,
- est reliée, par l'intermédiaire d'un troisième trajet de courant, à la sortie d'un dispositif (Q7, Q8 de commutation) bistable, qui, à des fins de déconnexion de l'onduleur en cas d'apparition d'un état de fonctionnement anomal, surveille une demi-onde, dont on fait la moyenne dans le temps, de la baisse de tension sur le composant (C1 ; C30) de circuit résonant.

2. Montage suivant la revendication 1, caractérisé en ce que le composant (C1 ; C30) du circuit résonant est un condensateur.

3. Procédé pour faire fonctionner des lampes électriques sur un montage, qui comporte un onduleur auto-hétérodyne à réinjection de courant, comportant au moins deux transistors (Q1, Q2 ; Q5, Q6) de commutation commutant en alternance, un circuit de charge, raccordé à la sortie de l'onduleur, comportant au moins un circuit (L1, C1 ; L32, C30) résonant, et un transistor (T1 ; T2), branché dans la ligne d'émetteur ou la ligne de source d'un transistor (Q2 ; Q6) de l'onduleur, la résistance d'émetteur ou la résistance de source du transistor (Q2, Q6) de l'onduleur et la fréquence de cycle de l'onduleur étant modifiée à l'aide du transistor (Q2 ; Q6),
caractérisé en ce que
- la modification de la résistance d'émetteur et de la résistance de source de l'un des transistors (Q2 ; Q6) de l'onduleur s'effectue pour limiter la tension de marche à vide dans le circuit de charge et en fonction d'une première demi-onde de la baisse de tension sur un composant (C1 ; C30) du circuit résonant, la résistance d'émetteur et la résistance de source du transistor (Q2 ; Q6) de l'onduleur étant, pour limiter la tension de marche à vide dans le circuit de charge, modifiée de manière que la différence entre la fréquence de cycle de l'onduleur et la fréquence de résonance du circuit résonant augmente,
- la deuxième demi-onde, dont on a fait la moyenne dans le temps, de la baisse de tension sur le composant (C1 ; C30) du circuit résonant est surveillée au moyen d'un dispositif (Q7, Q8) de commutation bistable, et l'onduleur est déconnecté, en cas d'apparition d'un état de fonctionnement anomal, à l'aide du transistor (T1 ; T2), par le dispositif (Q7, Q8) de commutation bistable.
